# EUROPEAN PATENT SPECIFICATION

(11) **EP 4 543 599 B1**
(45) Date of publication and mention of the grant of the patent: **24.06.2026**
(21) Application number: 23732679.8
(22) Date of filing: 29.05.2023
(51) Int. Cl.: B05B 13/02, B05C 3/09, B05C 9/14, B05C 13/02, H02K 15/12

(54) **IMPREGNATION PLANT FOR ELECTRIC MOTOR COMPONENTS AND ITS RESPECTIVE EQUIPMENT FOR SUPPORTING AND HANDLING THE INDIVIDUAL COMPONENTS**
IMPRÄGNIERANLAGE FÜR ELEKTROMOTORISCHE KOMPONENTEN UND ENTSPRECHENDE AUSRÜSTUNG ZUM TRAGEN UND HANDHABEN DER EINZELNEN KOMPONENTEN
INSTALLATION D'IMPRÉGNATION DE COMPOSANTS DE MOTEURS ÉLECTRIQUES ET SON ÉQUIPEMENT RESPECTIF POUR SUPPORTER ET MANIPULER LES COMPOSANTS INDIVIDUELS

(30) Priority: 22.06.2022 IT 202200013249
(43) Date of publication of application: 30.04.2025
(73) Proprietor: Tecnofirma S.p.A., 20900 Monza (MB) (IT)
(72) Inventor: GOI, Francesco, 20833 GIUSSANO (MB) (IT); BERETTA, Francesco Renzo, 22060 AROSIO (CO) (IT)
(74) Representative: Ottazzo, Marco Francesco Agostino
(86) International application number: PCT/IB2023/055486
(87) International publication number: WO 2023/248030

(56) References cited:
- US-A- 5 685 910
- US-A1- 2016 126 816
- US-A1- 2021 162 450
- US-A1- 2022 094 245

## Description

The present invention relates in general to an impregnation plant for electric motor components and, in particular, to an equipment for supporting and handling the individual components being processed in the plant. Each component has an axial symmetrical structure (i.e., it features a radial symmetry) and specifically consists of a stator for electric motors.

As known, an electric motor is formed of a stator and a rotor. These two components are generally axial symmetric ones, more specifically cylindrical, and, when properly combined together, generate a magnetic field as necessary for operating the electric motor. The stator and/or the rotor of an electric motor can be respectively provided with electric windings, which traditionally comprises a coil of copper wires and, in the specific case of a stator, are usually housed in respective internal cavities (called "slots") of the stator itself. Alternatively, the stator of an electric motor can be provided with a plurality of metal bars, typically made of copper, instead of a coil of copper wires (the so-called "hair pin" stators). Conversely, the rotor of an electric motor can be manufactured by using permanent magnets instead of a coil of copper wires. Both coils of copper wires and metal bars (but not permanent magnets) need to be impregnated with specific impregnating substances, typically formed of resins, as necessary to increment their mechanical strength and electrical insulation, as well as to improve heat dispersion.

The impregnation process for a stator and/or a rotor for electric motors can be obtained by using at least three different application technologies. In a first technology, the so-called "trickling" (or "drop by drop") one, one continuous trickle of resin is dripped onto the wires of the stator or the rotor, driven into rotation around a horizontal axis, or onto the copper bars of the stator. The resin penetrates the interstices between the wires or the bars by capillarity, up to filling the empty spaces between these wires or these bars.

In a second technology, the so-called "roll dip" one, the stator or the rotor is driven into rotation around a generally horizontal axis. While in rotation, each component is at least partially dipped into a resin bath. A third technology, the so-called "dipping" one, the stator or the rotor is dipped into a resin bath, in this case with its axis generally vertical and no longer in rotation.

Irrespective of the technology adopted, the following steps shall be sequentially performed in an impregnation process for impregnating a stator and/or a rotor for electric motors. In a first pre-heating step, each stator and/or rotor is heated up to reaching a temperature that is ideal for applying the resin. This temperature is typically in a range from 80°C to 120°C. In this pre-heating step, there is no need for keeping the component into rotation and heating can be performed in a variety of ways, such as, for example, by using hot air, induction, a combination of hot air and induction, or by Joule effect, that is by making an electric current flow through the copper bars or wires. The pre-heating step can be performed either in specific ovens or by using other appropriate equipment.

The pre-heating step is followed by an impregnation step, during which each component gets in contact with the liquid resin. This liquid resin fills the cavities between the individual wires or between the copper bars and covers the exposed part of copper. In this impregnation step, in the case of the "trickling" technologies adopted for impregnating stators, the component shall be kept into rotation, its axis being generally horizontal or possibly with an angle of tilt of the axis typically ranging from +15° to -15° with respect to a horizontal plane. Optimum impregnation results can be achieved by acting on the speed and/or direction of rotation. The impregnation step is usually performed by using specific impregnation equipment, which are separate from ovens.

After being impregnated, each component undergoes a gelling step. In this gelling step, the temperature of the component is raised, so as to trigger a resin cross-linking process, wherefrom its hardening. Also during this gelling step, in the case of the "trickling" and "roll dip" technologies, the component shall be kept into rotation in order to prevent the resin, still in a liquid status, from dripping away. The gelling step might require a time duration variable from eight to fifteen-twenty minutes in order for it to be completed, depending on the resin type. Conversely, in the case of the dipping technology, gelling can be achieved while the component is vertically dipped, by making a current flow through the copper bars or wires (Joule effect). Once the component is taken out of the bath, the resin around the wires is consequently already thickened and does not drip away.

In the next baking step, the resin, now gelled and consequently thick, completes its cross-linking process. During the baking step, each component shall be kept at a temperature, but it is not needed for it to be kept into rotation any longer. The baking step can be performed either inside the same oven where the previous steps have been performed or by using another suitable equipment. Once the baking step is over, the component undergoes a final cooling step, during which the component itself is cooled down either by way of a forced ventilation (using ambient or cooled air) or by resting in the environment for a predetermined period of time.

In traditional impregnation plants used for electric motor components, the equipment used to support these components usually comprises one or more spring collets. Each spring collet is equipped with gripping means consisting, for example, of clamps, which act on the inner side surface of the hollow axial symmetrical body that the component (typically, but not exclusively, the stator) of the electric motor is made up. Therefore, the clamps, which are usually operated for opening and closing via appropriate actuator mechanisms, are configured for holding each axial symmetrical component from the inside during all of its processing steps in the impregnation plant.

Document US 2021/162450 A1, filed in the name of the same applicant, discloses an impregnation plant for electric motor components according to the preamble of claim 1. Further plants according to the prior art for impregnating electric motor components are disclosed, for example, in documents US 2016/126816 A1, US 2022/094245 A1 and US 5685910 A.

A drawback that might frequently occur in traditional impregnation plants for electric motor components is due to the resin leaking from the copper bars or wires of the component. As a matter of fact, in the specific case of a stator, wires or bars are housed in respective cavities or slots present on the inner axial symmetrical surface of the stator itself, i.e., close to the points of contact of the clamps of the spring collets with such inner surface.

Consequently, resin, being not solidified yet and running the slots of the stator along the copper bars or wires that fill such slots by capillarity, might be attracted by the hot mass of the clamps of the spring collets. Therefore, resin might leak from these slots, notwithstanding the usual presence of a layer of insulating paper that at least partially coats the inner axial symmetrical surface of the stator. Not always is this layer of insulating paper capable of holding the resin, which is extremely fluid and consequently, because of the well-known capillarity phenomenon, easily spreads into the narrowest interstices.

Resin leakage might imply at least two main problems. A first problem, which is particularly severe, concerns contamination of the inner axial symmetrical surface of the stator, which the rotor will subsequently be put in. A second problem, less severe, but in any case an annoying one, concerns contamination of the gripping clamps of the collets, with a subsequent need for maintenance (collect cleaning).

An object of the present invention is therefore to provide an impregnation plant for electric motor components, in particular an equipment for supporting and handling the individual components being processed in the plant, that is capable of solving the above-mentioned drawbacks of the prior art in an extremely simple, cost-effective, and particularly functional manner.

In details, an object of the present invention is to provide an impregnation plant for axial symmetrical components of electric motors whose equipment used to support and handle the individual components are capable of reducing any leakages of resin from the body of the component itself as much as possible, so as to preserve it construction quality.

Another object of the present invention is to provide an impregnation plant for axial symmetrical components of electric motors whose equipment used to support and handle the individual components does not require corrective maintenance and/or cleaning operations insofar as possible.

A further object of the present invention is to provide an impregnation plant for axial symmetrical components of electric motors whose equipment for supporting and handling the individual components is provided with simple and reliable gripping means.

These objects according to the present invention are achieved by embodying an impregnation plant for axial symmetrical components of electric motors as disclosed in claim 1.

Further features of the invention are highlighted by the dependent claims, which are integral parts of the present disclosure.

The features and advantages of an impregnation plant for axial symmetrical components of electric motors according to the present invention will be more apparent from the following explanatory, non-limitative, description, which makes reference to the attached schematic drawings, wherein:
figure 1 is a perspective view of the main components of a preferred embodiment of the impregnation plant for axial symmetrical components of electric motors according to the present invention;
figure 2 is a perspective view of one single heating station of the plant of figure 1, shown in its heating or baking configuration;
figure 3 is a perspective view of the heating station of figure 2, shown in a first impregnation configuration;
figure 4 is a perspective view of the heating station of figure 2, shown in a second impregnation configuration;
figure 5 is a perspective view of the heating station of figure 2, shown in a third impregnation configuration;
figure 6 is a perspective view of a preferred embodiment of the components supporting and handling equipment belonging to the plant of figure 1;
figure 7 is an enlarged view of the detail identified by VII in figure 6;
figure 8 in an enlarged view of de detail identified by VIII in figure 6;
figure 9 is a cross sectional view of the equipment of figure 6, wherein the impregnation nozzles are shown in a first operating position;
figure 10 in another cross-sectional view of the equipment of figure 6, wherein the impregnation nozzles are shown in a second operating position;
figure 11 is a perspective view of a single support device that holds an axial symmetrical (in particular, cylindrical) component of electric motors, wherein a part of the means used to handle such support device is shown;
figure 12 is another perspective view of a single support device that holds an axial symmetrical (in particular, cylindrical) component of electric motors;
figure 13 is a longitudinal cross-sectional view, i.e., one obtained along the axis of symmetry, of the support device and of the axial symmetrical component of figure 12;
figure 14 is a cross sectional view, i.e., one obtained orthogonally with respect to the axis of symmetry, of the support device and of the axial symmetrical component shown of figure 12; and
figure 15 is another cross-sectional view of the support device and of the axial symmetrical component of figure 12.

With reference to the figures, a preferred embodiment of an impregnation plant for axial symmetrical components of electric motors according to the present invention is shown. The impregnation plant is referred to with the reference numeral 10 as a whole. The impregnation plant 10 comprises a plurality of working stations and equipment, monitored and controlled by a central processing unit. The impregnation plant 10 comprises at least one support frame 12 and one or more heating stations 14, which are configured for heating each component 100 to a predetermined temperature.

The impregnation plant 10 also comprises one or more motor-driven equipment 16 used to support and handle the components 100. Each of these equipment 16 comprises at least one gripping device 22 for a respective component 100, as well as first motor-driven rotation means 24, which are configured for imparting a rotatory motion to each gripping device 22, in both directions of rotation, around a predetermined rotation axis, which coincides with the axis of symmetry of the component 100 when held by a respective gripping device 22. Each of these equipment 16 also comprises second motor-driven translation means 26, which are configured for imparting a translatory movement from inside to outside to a respective heating station 14, and vice versa, to each motor-driven equipment 16 used to support and handle the components 100 along with their respective gripping devices 22.

The impregnation plant 10 also comprises one or more impregnation equipment 18, which are configured for at least partially coating each component 100 with an impregnating substance whenever such component 100 is held by a respective gripping device 22, and one or more transport and loading/unloading equipment 20, which are configured for transferring the components 100 from and to the heating stations 14. The impregnating substance might consist of resins or other similar impregnating fluids in a manner known per se.

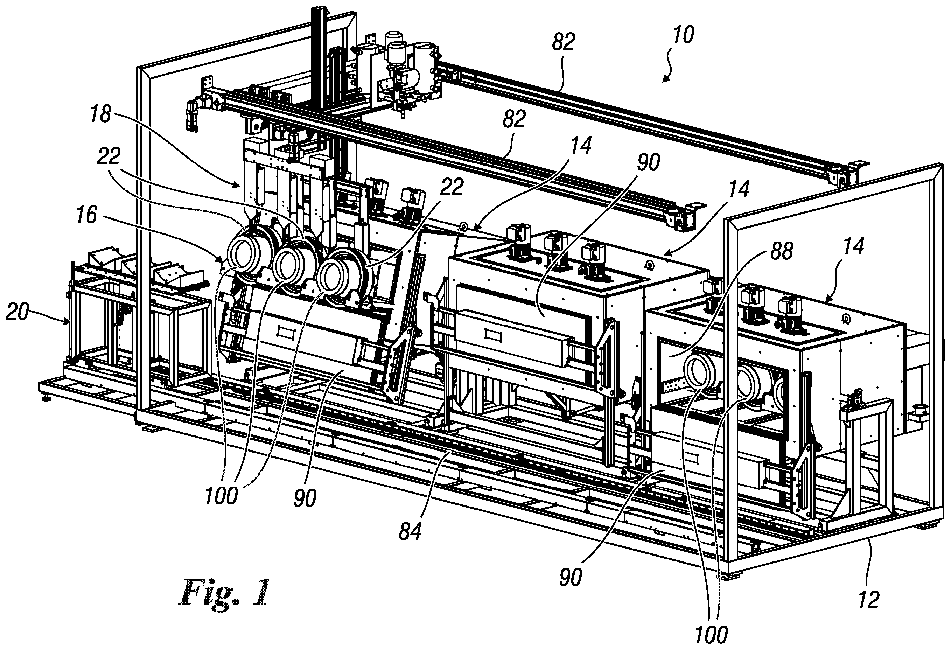

The support frame 12 is preferably provided with one or more handling and guiding means 82, 84. Consequently, the impregnation equipment 18 and the transport and loading/unloading equipment 20 can be mounted on these handling and guiding means 82, 84 in a movable manner. For example, the handling and guiding means 82, 84 might consist of one or more upper sliding guides 82, positioned on the support frame 12 at one upper end thereof, and one or more lower sliding guides 84, positioned on the support frame 12 at a bearing surface. As shown in figure 1, each impregnation equipment 18 can move along the upper sliding guides 82 and is electrically controlled, by the central processing unit, to move and selectively position above each of the heating stations 14 in the moment when the individual components 100 undergo the impregnation step.

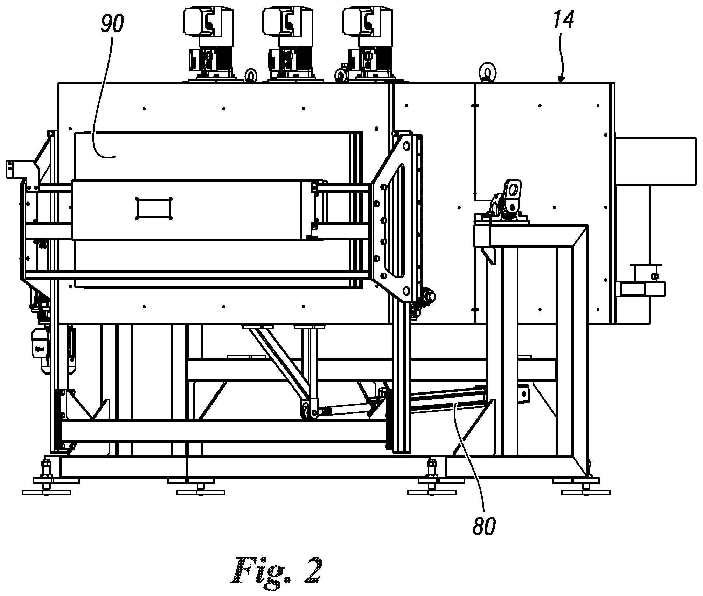

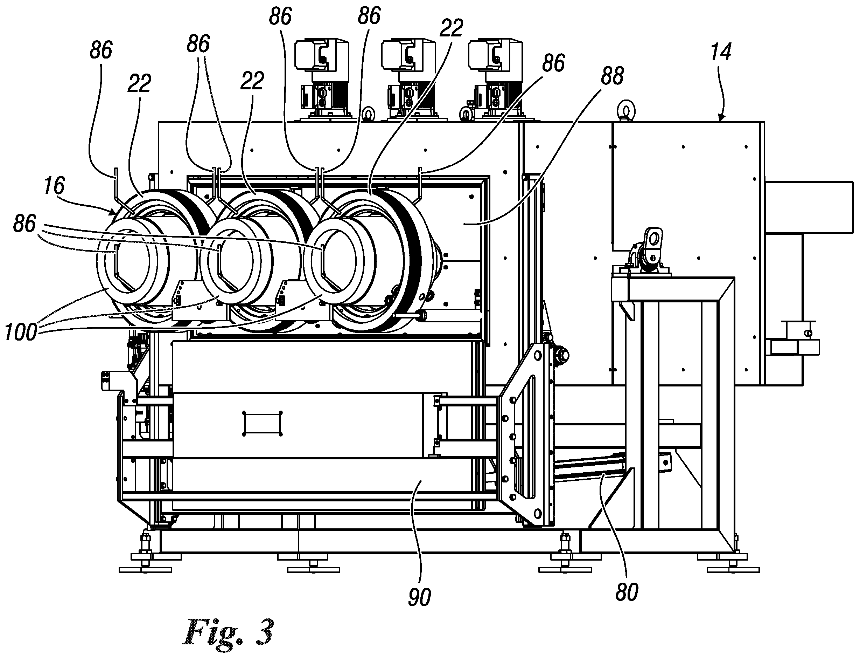

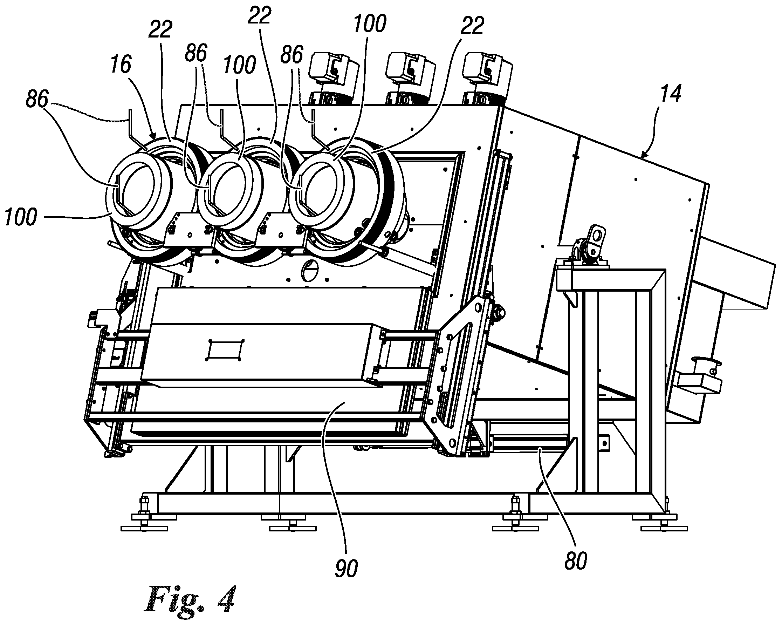

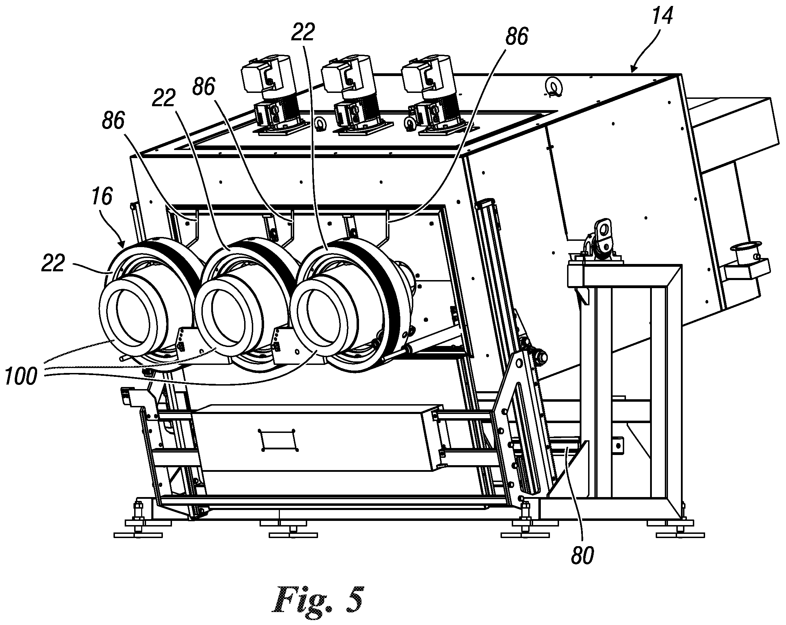

According to a preferred embodiment of the impregnation plant 10, shown in the attached figures, each heating station 14 comprises an oven, equipped with at least an internal chamber 88 and at least one front closing door 90, i.e., a door arranged on one side of said oven 14. Each motor-driven equipment 16 used to support and handle the components 100, along with its respective gripping devices 22, is thus configured for moving between a retracted position, within the internal chamber 88 of the oven 14 (see figure 2, where the motor-driven equipment 16 used to support and handle the components 100 is not visible just because it is located inside the internal chamber 88 of the oven 14) and an advanced position, outside said internal chamber 88 of the oven 14 (figures 3, 4 and 5, wherein the motor-driven equipment 16 used to support and handle the components 100 is visible outside the oven 14).

Each impregnation equipment 18 is provided with a plurality of dispensing nozzles 86 configured for making a continuous trickle of impregnating substance (resin) drip down onto each component 100. The impregnating substance is dispensed by the dispensing nozzles 86 whenever each component 100 is in rotation on a respective gripping device 22 and when such gripping device 22 is in turn outside the internal chamber 88 of one of the ovens 14, as shown for example in figures 3, 4, and 5.

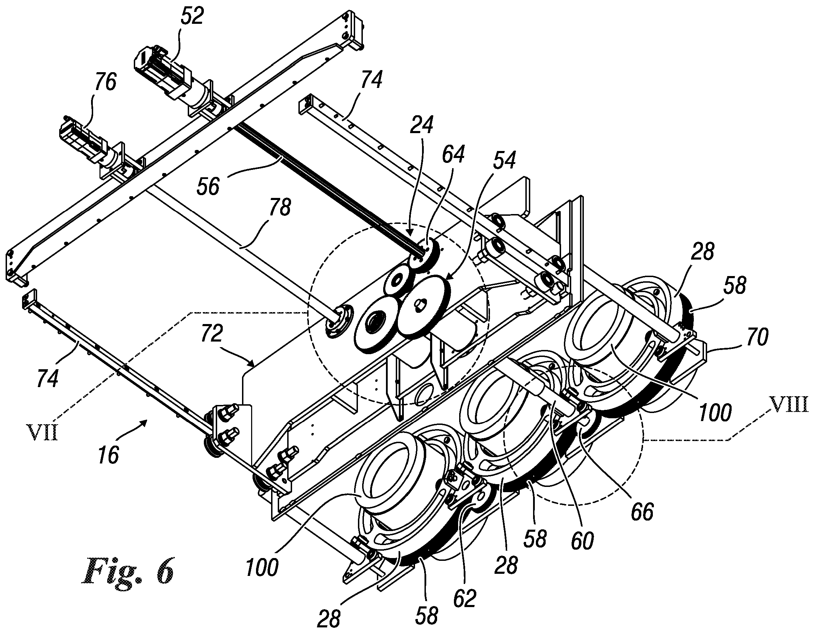

According to the invention, as shown in particular in figures 6 to 15, each gripping device 22 comprises at least one annular body 28 which is provided with at least one internal axial symmetrical cavity 30. This internal cavity 30 has a maximum dimension D1, as measured in a radial direction, that is greater than the maximum dimension D2 as measured in a radial direction of each component 100, consequently this internal cavity 30 can house a respective component 100 internally thereto. The annular body 28 of each gripping device 22 also comprises at least one gripping means 32, which faces its respective internal cavity 30 to grip the outer side surface of the hollow axial symmetrical body that constitutes each component 100 and to hold such component 100 inside the internal cavity 30 of its respective gripping device 22.

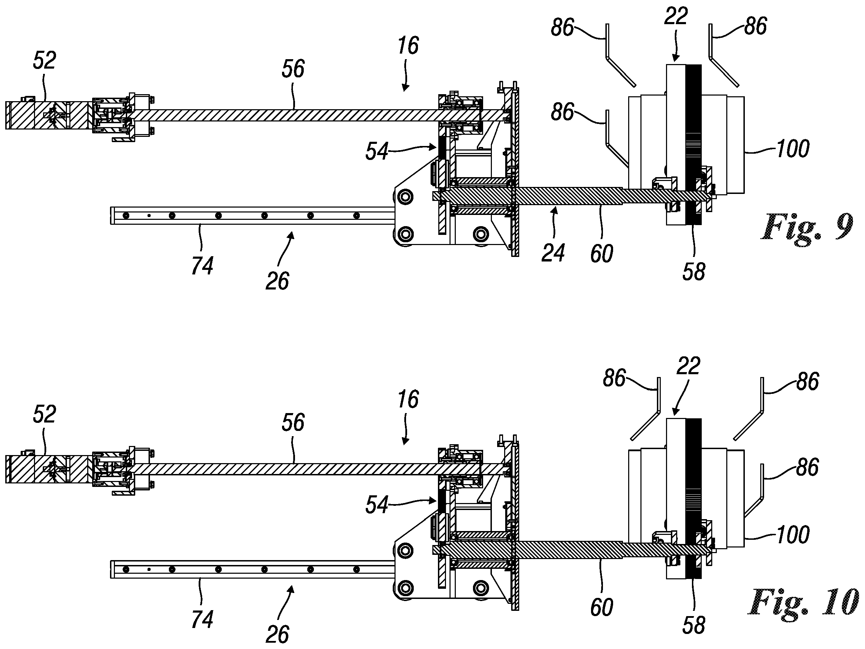

So, each gripping device 22 operates as an "external gripper", i.e., one capable of gripping a respective component 100, typically consisting of a hollow cylindrical stator, on its outer side surface. In other words, each gripping device 22 does not seize the inner side surface of each component 100 in any way, so as to allow the dispensing nozzles 86 to position at the usual points normally used to obtain an effective coating of the electric windings while the impregnating substance is dispensed by the impregnation equipment 18. As shown, for instance, in figures 9 and 10, these positioning points are typically located at the outer diameter of the front ring, the inner diameter of the front ring, the outer diameter of the rear ring, and the inner diameter of the rear ring of each component 100.

Each gripping device 22 shall keep its respective component 100 into rotation and shall be capable of allowing for an inversion of the rotation motion, as well as of varying its speed of rotation. Each motor-driven equipment 16 used to support and handle the components 100, along with its respective gripping devices 22, is consequently conveniently engineered to house in the internal chamber 88 of each oven 14 and shall be capable of tilting contextually with the oven 14 itself. As a matter of fact, at least one of the ovens 14 of the impregnation plant 10 is provided with tilting means 80, configured for imparting a tilting movement to the oven 14, hence to each component 100 with respect to a bearing plane of the support frame 12, , whenever such component 100 is mounted on a respective gripping device 22 and the motor-driven equipment 16 used to support and handle the components 100 is placed outside the oven 14.

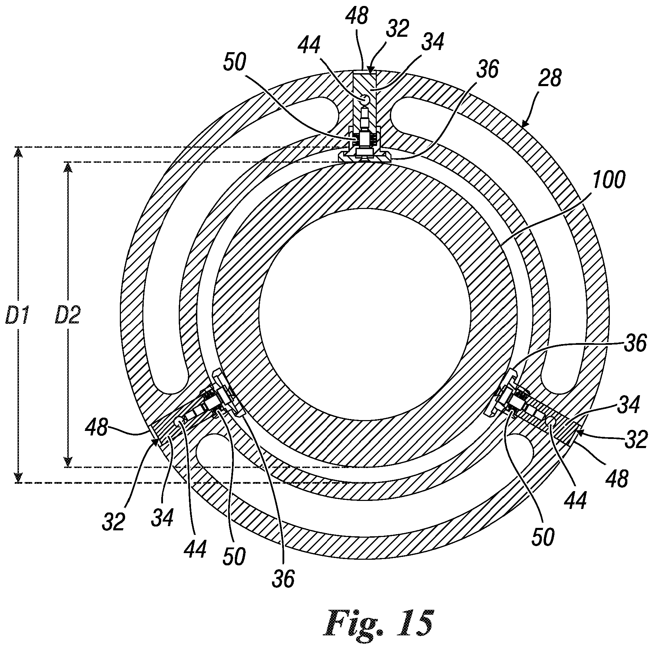

Since each component 100 is typically formed of a hollow cylindrical stator, each annular body 28 of a respective gripping device 22 is also a cylindrical body, consequently each internal cavity 30 features a circular shape. Consequently, the maximum dimension D1 of the internal cavity 30 corresponds to the diameter of such internal cavity 30, as shown in figure 15.

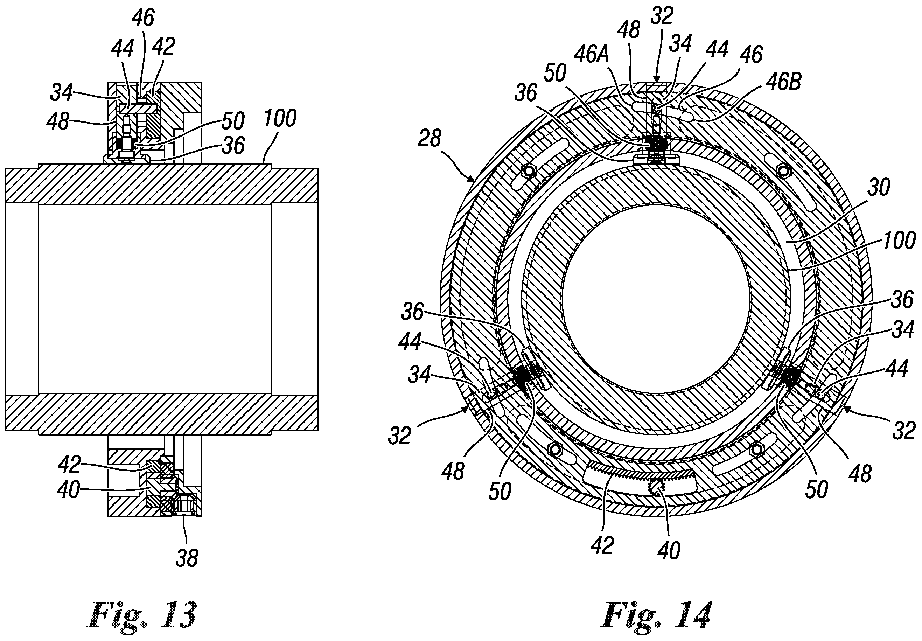

As shown in figures 13 to 15, each gripping means 32 comprises at least one rod-shaped pusher element 34, which is movable, according to a reciprocating motion, within a respective guide hole 48 obtained in a radial direction on the annular body 28 of a respective gripping device 22. Each pusher element 34 also comprises, at an end thereof that faces the internal cavity 30, at least one clamping element 36 configured for bearing, by friction, on the side outer surface of the hollow axial symmetrical body that constitutes each component 100 placed inside such internal cavity 30. Each annular body 28 preferably comprises at least two or more gripping means 32, which are circumferentially equally spaced from each other, in order to exert an effective holding action on the component 100.

According to a preferred aspect of the present invention, and as shown in particular in figures 13 and 14, all gripping means 32 are operated simultaneously by way of a mechanism that sequentially comprises:
- at least one clamping key 38, which is placed on the outer circumferential surface of each annular body 28 and is operatable for rotation;
- at least one toothed wheel 40, on which the clamping key 38 meshes and is operatable for rotation by a corresponding rotation of such clamping key 38;
- at least one slewing ring 42, on which a respective toothed wheel 40 meshes and is movable with a circumferential motion within the annular body 28;
- at least one pin 44, which is integral with the slewing ring 42 on one side and with a respective pusher element 34 on the other side and is arranged perpendicularly to the direction of development of the pusher element 34; and
- at least one slot 46, which extends inside said annular body 28 between a first end 46A, having a greater distance from the geometric centre of the annular body 28, and a second end 46B, having a lower distance from the geometric centre of the annular body 28, so that a sliding movement of the pin 44 inside a respective slot 46 between its first end 46A and its second end 46B causes a corresponding sliding movement of its respective pusher element 34 within the guide hole 48 in such a direction as to get closer to the outer side surface of the hollow axial symmetrical body that constitutes each component 100 placed in the internal cavity 30, whereas a sliding movement of the pin 44 within a respective slot 46 between its second end 46B and its first end 46A causes a corresponding sliding movement of its respective pusher element 34 within the guide hole 48 in a direction away from the outer side surface of the hollow axial symmetrical body that constitutes each component 100 placed in the internal cavity 30 of the annular body 28.

In other words, the assembly formed of the clamping key 38, the toothed wheel 40, the slewing ring 42, the pin 44 and the "eccentric" slot 46 forms an eccentric mechanism, which is configured for imparting a reciprocating movement to each rod-shaped pusher element 34 within its respective guide hole 48 present on the annular body 28. Each rod-shaped pusher element 34 can additionally be conveniently provided with at least one compression spring 50, which is configured for compensating for any thermal expansions of the component 100 placed inside the internal cavity 30 of the annular body 28. As a matter of fact, such thermal expansion might raise on the side surface of each component 100 during its respective processing steps, in particular the heating step, in the impregnation plant 10.

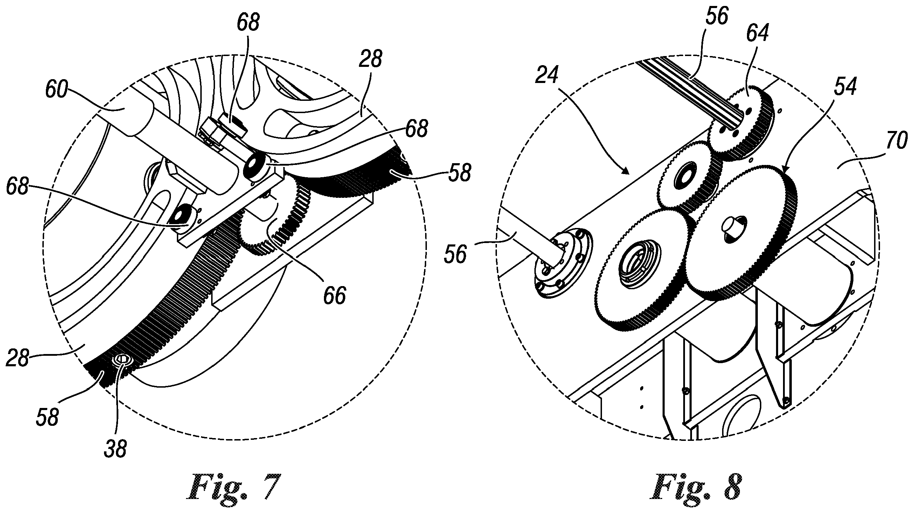

As shown in the embodiment illustrated in figure 6 and in the enlarged views in figures 7 and 8, the first motor-driven rotation means 24 of each motor-driven equipment 16 used for supporting and handling the components 100 might sequentially comprise at least one first electric motor 52, a gear unit 54, at least one ring gear 58 integral with the annular body 28 of a single gripping device 22, and at least one second transmission shaft 60. The first transmission shaft 56 is operatively connected to the first electric motor 52 at a first end thereof, whereas a gear 64 is keyed on a second end of such first transmission shaft 56, configured for transmitting a rotatory motion from the first electric motor 52 to the gear unit 54. The second transmission shaft 60 is operatively connected to the gear unit 54 at a first end thereof, whereas a driving pinion 66 is keyed on a second end of such second transmission shaft 60, configured for transmitting motion from the gear unit 54 to the ring gear 58. Irrespective of the embodiment of the first motor-driven rotation means 24 of each motor-driven equipment 16 for supporting and handling the components 100, it is here emphasised that the rotation motion can be imparted to the gripping devices 22 either when these gripping devices 22 are in a retracted position, i.e., in the internal chamber 88 of each oven 14, or when these gripping devices 22 are in an advanced position, i.e., under the dispensing nozzles 86 of each impregnation equipment 18.

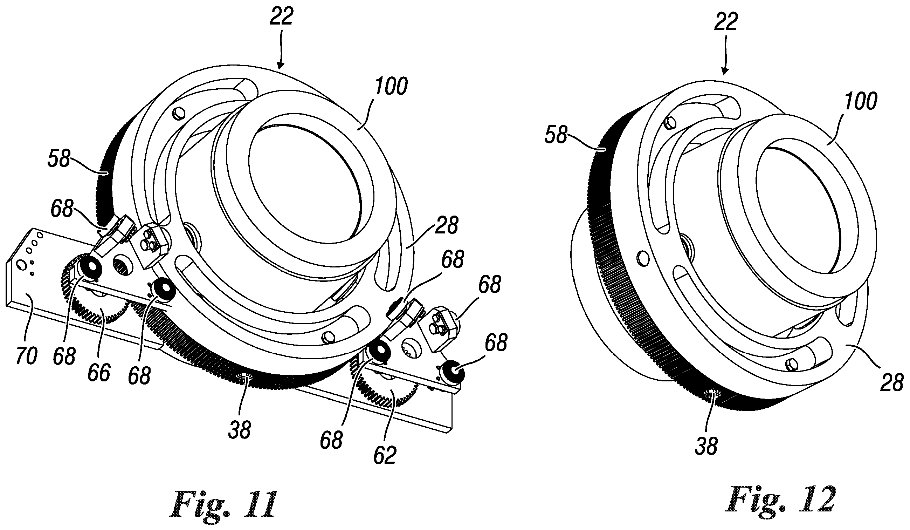

Preferably, each motor-driven equipment 16 for supporting and handling the components 100 can comprise one or more idle pinions 62 (visible, for example, in figures 6 and 11), which are configured for transmitting motion from the ring gear 58 operated by the driving pinion 66 to one or more gripping devices 22, whose ring gears 58 mesh the corresponding idle pinions 62. It is thus possible to drive a plurality of gripping devices 22 into rotation by using one motor-driven rotation means 24 of the motor-driven equipment 16 used for supporting and handling the components 100. As a matter of fact, it is convenient to have motor-driven equipment 16 at his/her disposal for supporting and handling the components 100 that comprise a plurality (for instance three, as shown in the figures) of gripping devices 22 arranged in parallel. An advantage is in that, by imparting a rotation motion and an inclination to one single gripping device 22, these movements are automatically transmitted to all the remaining gripping devices 22 arranged in parallel, while maintaining the phase relationships of the individual gripping devices 22. Also preferably, each gripping device 22 is mounted on one support frame 70 and is rotatable with respect to such support frame 70 through the interposition of a plurality of rolling bearings 68, as shown, for example, in figure 11.

As shown in particular in figure 6, an embodiment of the second motor-driven translation means 26 of each motor-driven equipment 16 for supporting and handling the components 100 can sequentially comprise:
- at least one slide 72, which supports the gripping devices 22 and is movable according to a reciprocating motion along guides 74 integral with a respective heating station 14;
- at least one second electric motor 76; and
- at least one splined shaft 78, which is operatively connected to the second electric motor 76 at a first end thereof and to the slide 72 at a second end thereof.

The splined shaft 78 is configured for transforming a rotatory motion, as imparted by the second electric motor 76, into a reciprocating motion of the slide 72. In this way, a translation is obtained of the gripping devices 22 from the outside to the inside of each internal chamber 88 of a respective oven 14, and vice versa. As an alternative to the embodiment of the second motor-driven translation means 26 of each motor-driven equipment 16 for supporting and handling the components 100 as described above, these motor-driven translation means might also be formed of an anthropomorphic robot mounted on an axle.

It has been thus shown that the impregnation plant for axial symmetrical components of electric motors according to the present invention achieves the above highlighted objects. The impregnation plant for axial symmetrical components of electric motors according to the present invention, whose gripping devices do not interact with the inner side surface of any component, enable the nozzles used to dispense the impregnating substance to easily reach the critical dispensing points (outer diameter of the front ring, inner diameter of the front ring, outer diameter of the rear ring, and inner diameter of the rear ring of each component).

The impregnation plant for axial symmetrical components of electric motors according to the present invention, as conceived, is in any case susceptible of numerous modifications and variants, all falling within the scope of the same inventive concept. In practice, the materials used, as well as their shapes and dimensions, might be whatsoever depending on the technical requirement. The scope of protection of this invention is therefore that defined by the attached claims.

## Claims

1. An impregnation plant (10) for hollow axial symmetrical components (100) of electric motors, said plant (10) consisting of a plurality of working stations and equipment managed and controlled by a central processing unit, said plant (10) comprising:
- at least one support frame (12);
- one or more heating stations (14), which are configured for heating each component (100) to a predetermined temperature;
- one or more motor-driven equipment (16) for supporting and handling said components (100), wherein each motor-driven equipment (16) for supporting and handling said components (100) comprises:
- at least one gripping device (22) for a respective component (100),
- first motor-driven rotation means (24), configured for imparting a rotatory motion to each gripping device (22), in both directions of rotation, around a predetermined rotation axis, which coincides with the axis of symmetry of said component (100) when held by a respective gripping device (22),
- second motor-driven translation means (26), configured for imparting a translation movement from the inside to the outside of a respective heating station (14), and vice versa, to each motor-driven equipment (16) for supporting and handling said components (100), with their respective gripping devices (22);
- one or more impregnation equipment (18), configured for coating at least part of each component (100) with an impregnating substance when said component is held by a respective gripping device (22); and
- one or more transport and loading/unloading equipment (20), arranged to transfer said components (100) from and to said one or more heating stations (14),
the impregnation plant (10) being **characterized in that** each gripping device (22) comprises at least one annular body (28) which is provided with at least one axial symmetrical internal cavity (30), wherein said internal cavity (30) has a maximum dimension (D1), as measured in a radial direction, that is greater than the maximum dimension (D2) measured in the radial direction of each component (100), so that said internal cavity (30) can house said component (100) herein, and wherein said annular body (28) comprises at least one gripping means (32) facing said internal cavity (30) for gripping the outer side surface of the hollow axial symmetrical body that forms each component (100) and for holding said component (100) inside said internal cavity (30), wherein said annular body (28) is a cylindrical body and said internal cavity (30) has a circular shape, wherein the maximum dimension (D1) of said internal cavity (30) corresponds to the diameter of said internal cavity (30), and wherein each gripping means (32) comprises at least one rod-shaped pusher element (34), which is movable according to a reciprocating motion inside a respective guide hole (48) obtained in a radial direction on said annular body (28), said pusher element (34) comprising, at an end thereof that faces said internal cavity (30), at least one clamping element (36) configured for bearing by friction on the outer side surface of the hollow axial symmetrical body that constitutes each component (100) placed inside said internal cavity (30).

2. The impregnation plant (10) according to claim 1, **characterized in that** said annular body (28) comprises two or more gripping means (32) that are circumferentially equally spaced from each other.

3. The impregnation plant (10) according to claim 2, **characterized in that** all gripping means (32) are operated simultaneously by way of a mechanism that sequentially comprises:
- at least one clamping key (38), which is placed on the outer circumferential surface of said annular body (28) and is operatable for rotation;
- at least one toothed wheel (40), on which said clamping key (38) meshes and is operatable for rotation by way of a corresponding rotation of said clamping key (38);
- at least one slewing ring (42), on which said toothed wheel (40) meshes and is movable with a circumferential motion within said annular body (28);
- at least one pin (44), which is integral with said slewing ring (42) on one side and with a respective pusher element (34) on the other side, and is arranged perpendicularly to the direction of development of said pusher element (34); and
- at least one slot (46), which extends inside said annular body (28) between a first end (46A) of said slot (46), having a greater distance from the geometric centre of said annular body (28), and a second end (46B) of said slot (46), having a smaller distance from the geometric centre of said annular body (28), so that a sliding movement of said pin (44) within a respective slot (46) between said first end (46A) and said second end (46B) causes a corresponding sliding movement of its respective pusher element (34) within the guide hole (48) in such a direction as to get closer to the outer side surface of the hollow axial symmetrical body that constitutes each component (100) placed inside said internal cavity (30), whereas a sliding movement of said pin (44) within a respective slot (46) between said second end (46B) and said first end (46A) causes a corresponding sliding movement of its respective pusher element (34) within the guide hole (48) in a direction away from the outer side surface of the hollow axial symmetrical body that constitutes each component (100) placed inside said internal cavity (30).

4. The impregnation plant (10) according to any claims 1 to 3, **characterized in that** each rod-shaped pusher element (34) is provided with at least one compression spring (50), wherein said spring is configured for compensating for any thermal expansions of the component (100) placed inside said internal cavity (30).

5. The impregnation plant (10) according to any claims 1 to 4, **characterized in that** said first motor-driven rotation means (24) comprise:
- at least one first electric motor (52);
- a gear unit (54);
- at least one first transmission shaft (56), operatively connected to said first electric motor (52) at a first end thereof and on a second end of which a gear (64) is keyed, said gear (64) being configured for imparting a rotatory motion from said first electric motor (52) to said gear unit (54);
- at least one ring gear (58), integral with the annular body (28) of a single gripping device (22); and
- at least one second transmission shaft (60), operatively connected to said gear unit (54) at a first end thereof and on a second end of which a driving pinion (66) is keyed, configured for transmitting motion from said gear unit (54) to said ring gear (58).

6. The impregnation plant (10) according to claim 5, **characterized in that** each motor-driven equipment (16) for supporting and handling said components (100) comprises one or more idle pinions (62), which are arranged for transmitting motion from the ring gear (58) driven by said driving pinion (66) to one or more gripping devices (22), the ring gears (58) of which engage on corresponding idle pinions (62).

7. The impregnation plant (10) according to any claims 1 to 6, **characterized in that** each gripping device (22) is mounted on a single support frame (70) and is rotatable with respect to said support frame (70) by interposing a plurality of rolling bearings (68).

8. The impregnation plant (10) according to any claims 1 to 7, **characterized in that** said second motor-driven translation means (26) comprise:
- at least one slide (72), which supports said gripping devices (22) and is movable with a reciprocating motion along guides (74) integral with said heating station (14);
- at least one second electric motor (76); and
- at least one splined shaft (78), which is operatively connected to said second electric motor (76) at one first end thereof and to said slide (72) at a second end thereof, said splined shaft (78) being configured for transforming a rotatory motion imparted by said second electric motor (76) into a reciprocating motion of said slide (72).

9. The impregnation plant (10) according to any claims 1 to 8, **characterized in that** at least one of said heating stations (14) is provided with tilting means (80), configured for imparting a tilting movement to said heating station (14), hence to each component (100), with respect to a bearing plane of said support frame (12), when said component (100) is mounted on its respective gripping device (22) and when said motor-driven equipment (16) for supporting and handling said components (100) is placed outside said heating station (14).

10. The impregnation plant (10) according to any of claims 1 to 9, **characterized in that** said support frame (12) is provided with one or more handling and guiding means (82, 84), said one or more impregnation equipment (18) and said one or more transport and loading/unloading equipment (20) being mounted in a movable manner on said one or more handling and guiding means (82, 84).

11. The impregnation plant (10) according to claim 10, **characterized in that** said handling and guiding means (82, 84) consist of one or more upper sliding guides (82), positioned on said support frame (12) at an upper end thereof, and one or more lower sliding guides (84), positioned on said support frame (12) at a bearing surface, wherein each impregnation equipment (18) moves along said upper sliding guides (82) and is electrically controlled by said central processing unit to move and selectively position itself in front of each heating station (14) when the impregnation step of said components (100) is carried out.

## Patentansprüche

1. Imprägnieranlage (10) für hohle axialsymmetrische Komponenten (100) von Elektromotoren, die Anlage (10) bestehend aus einer Vielzahl von Arbeitsstationen und Ausrüstungen, die von einer zentralen Verarbeitungseinheit verwaltet und gesteuert werden, die Anlage (10) umfassend:
- mindestens einen Tragrahmen (12);
- eine oder mehrere Heizstationen (14), die konfiguriert sind, um jede Komponente (100) auf eine vordefinierte Temperatur zu erhitzen;
- eine oder mehrere motorgetriebene Ausrüstungen (16) zum Tragen und Handhaben der Komponenten (100), wobei jede motorgetriebene Ausrüstung (16) zum Tragen und Handhaben der Komponenten (100) Folgendes umfasst:
- mindestens eine Greifvorrichtung (22) für eine jeweilige Komponente (100),
- erste motorgetriebene Dreheinrichtungen (24), die konfiguriert sind, um jeder Greifvorrichtung (22) eine Drehbewegung in beiden Drehrichtungen um eine vorbestimmte Rotationsachse zu verleihen, die mit der Symmetrieachse der Komponente (100) zusammenfällt, wenn sie von einer entsprechenden Greifvorrichtung (22) gehalten wird,
- zweite motorgetriebene Translationseinrichtungen (26), die konfiguriert sind, um jeder motorgetriebenen Ausrüstung (16) zum Tragen und Handhaben der Komponenten (100) mit ihren jeweiligen Greifvorrichtungen (22) eine Translationsbewegung von der Innenseite zu der Außenseite einer jeweiligen Heizstation (14) und umgekehrt zu verleihen;
- eine oder mehrere Imprägnierausrüstungen (18), die konfiguriert sind, um zumindest einen Teil jeder Komponente (100) mit einer Imprägniersubstanz zu beschichten, wenn die Komponente von einer jeweiligen Greifvorrichtung (22) gehalten wird; und
- eine oder mehrere Transport- und Be-/Entladeeinrichtungen (20), die angeordnet sind, um die Komponenten (100) von und zu der einen oder den mehreren Heizstationen (14) zu transportieren,
wobei die Imprägnieranlage (10) **dadurch gekennzeichnet ist, dass** jede Greifvorrichtung (22) mindestens einen ringförmigen Körper (28) umfasst, der mit mindestens einem axialsymmetrischen inneren Hohlraum (30) versehen ist, wobei der innere Hohlraum (30) eine maximale Abmessung (D1) gemessen in radialer Richtung aufweist, die größer ist als die maximale Abmessung (D2) gemessen in radialer Richtung jeder Komponente (100), sodass der innere Hohlraum (30) die Komponente (100) darin aufnehmen kann, und wobei der ringförmige Körper (28) mindestens eine Greifeinrichtung (32) umfasst, die dem inneren Hohlraum (30) zugewandt ist, um die äußere Seitenfläche des hohlen axialsymmetrischen Körpers, der jede Komponente (100) bildet, zu ergreifen und um die Komponente (100) im Inneren des inneren Hohlraums (30) zu halten, wobei der ringförmige Körper (28) ein zylindrischer Körper ist und der innere Hohlraum (30) eine kreisförmige Form aufweist, wobei die maximale Abmessung (D1) des inneren Hohlraums (30) dem Durchmesser des inneren Hohlraums (30) entspricht, und wobei jede Greifeinrichtung (32) mindestens ein stabförmiges Schieberelement (34) umfasst, das gemäß einer Hin- und Herbewegung innerhalb eines jeweiligen Führungslochs (48), das in einer radialen Richtung auf dem ringförmigen Körper (28) erlangt ist, bewegbar ist, das Schieberelement (34) umfassend an einem Ende davon, das dem inneren Hohlraum (30) zugewandt ist, mindestens ein Klemmelement (36), das zum Tragen durch Reibung an der äußeren Seitenfläche des hohlen axialsymmetrischen Körpers, der jede Komponente (100) bildet, die in dem inneren Hohlraum (30) platziert ist, konfiguriert ist.

2. Imprägnieranlage (10) nach Anspruch 1, **dadurch gekennzeichnet, dass** der ringförmige Körper (28) zwei oder mehrere Greifeinrichtungen (32) umfasst, die in Umfangsrichtung gleichförmig voneinander beabstandet sind.

3. Imprägnieranlage (10) nach Anspruch 2, **dadurch gekennzeichnet, dass** alle Greifeinrichtungen (32) gleichzeitig durch einen Mechanismus betätigt werden, der aufeinanderfolgend Folgendes umfasst:
- mindestens eine Klemmfeder (38), die an der äußeren Umfangsfläche des ringförmigen Körpers (28) platziert und in Drehung versetzbar ist;
- mindestens ein Zahnrad (40), in das die Klemmfeder (38) eingreift und das durch eine entsprechende Drehung der Klemmfeder (38) in Drehung versetzbar ist;
- mindestens einen Drehkranz (42), an dem das Zahnrad (40) eingreift und mit einer Umfangsbewegung innerhalb des ringförmigen Körpers (28) bewegbar ist;
- mindestens einen Stift (44), der auf einer Seite mit dem Drehkranz (42) und auf der anderen Seite mit einem entsprechenden Schieberelement (34) fest verbunden ist und senkrecht zu der Verlaufsrichtung des Schieberelements (34) angeordnet ist; und
- mindestens einen Schlitz (46), der sich innerhalb des ringförmigen Körpers (28) zwischen einem ersten Ende (46A) des Schlitzes (46), das einen größeren Abstand von der geometrischen Mitte des ringförmigen Körpers (28) aufweist, und einem zweiten Ende (46B) des Schlitzes (46), das einen kleineren Abstand von der geometrischen Mitte des ringförmigen Körpers (28) aufweist, erstreckt, sodass eine Gleitbewegung des Stifts (44) innerhalb eines jeweiligen Schlitzes (46) zwischen dem ersten Ende (46A) und dem zweiten Ende (46B) eine entsprechende Gleitbewegung seines jeweiligen Schubelements (34) innerhalb des Führungslochs (48) in einer solchen Richtung bewirkt, um sich der äußeren Seitenfläche des hohlen axialsymmetrischen Körpers anzunähern, der jede Komponente (100) bildet, die innerhalb des inneren Hohlraums (30) platziert ist, wobei eine Gleitbewegung des Stifts (44) innerhalb eines entsprechenden Schlitzes (46) zwischen dem zweiten Ende (46B) und dem ersten Ende (46A) eine entsprechende Gleitbewegung seines jeweiligen Schieberelements (34) innerhalb des Führungslochs (48) in einer Richtung weg von der äußeren Seitenfläche des hohlen axialsymmetrischen Körpers bewirkt, der jede Komponente (100) bildet, die innerhalb des inneren Hohlraums (30) platziert ist.

4. Imprägnieranlage (10) nach einem der Ansprüche 1 bis 3, **dadurch gekennzeichnet, dass** jedes stabförmige Schieberelement (34) mit mindestens einer Druckfeder (50) versehen ist, wobei die Feder konfiguriert ist, um etwaige thermische Ausdehnungen der Komponente (100) zu kompensieren, die in dem inneren Hohlraum (30) platziert ist.

5. Imprägnieranlage (10) nach einem der Ansprüche 1 bis 4, **dadurch gekennzeichnet, dass** die erste motorgetriebene Dreheinrichtung (24) Folgendes umfasst:
- mindestens einen ersten Elektromotor (52);
- ein Getriebe (54);
- mindestens eine erste Übertragungswelle (56), die mit dem ersten Elektromotor (52) an einem ersten Ende davon funktionsfähig verbunden ist und auf deren zweitem Ende ein Zahnrad (64) aufgesteckt ist, wobei das Zahnrad (64) konfiguriert ist, um eine Drehbewegung von dem ersten Elektromotor (52) auf das Getriebe (54) zu übertragen;
- mindestens einen Zahnkranz (58), der fest mit dem ringförmigen Körper (28) einer einzelnen Greifvorrichtung (22) verbunden ist; und
- mindestens eine zweite Übertragungswelle (60), die an einem ersten Ende davon funktionsfähig mit dem Getriebe (54) verbunden ist und auf deren zweitem Ende ein Antriebsritzel (66) aufgesteckt ist, das zum Übertragen einer Bewegung von dem Getriebe (54) auf den Zahnkranz (58) konfiguriert ist.

6. Imprägnieranlage (10) nach Anspruch 5, **dadurch gekennzeichnet, dass** jede motorgetriebene Ausrüstung (16) zum Tragen und Handhaben der Komponenten (100) ein oder mehrere Leerlaufritzel (62) umfasst, die angeordnet sind, um eine Bewegung von dem Zahnkranz (58), der von dem Antriebsritzel (66) angetrieben wird, auf eine oder mehrere Greifvorrichtungen (22) zu übertragen, deren Zahnkränze (58) an entsprechenden Leerlaufritzeln (62) eingreifen.

7. Imprägnieranlage (10) nach einem der Ansprüche 1 bis 6, **dadurch gekennzeichnet, dass** jede Greifvorrichtung (22) auf einem einzigen Tragrahmen (70) montiert ist und in Bezug auf den Tragrahmen (70) durch Einfügen einer Vielzahl von Wälzlagern (68) drehbar ist.

8. Imprägnieranlage (10) nach einem der Ansprüche 1 bis 7, **dadurch gekennzeichnet, dass** die zweite motorgetriebene Translationseinrichtung (26) Folgendes umfasst:
- mindestens einen Schlitten (72), der die Greifvorrichtungen (22) trägt und mit einer Hin- und Herbewegung entlang von Führungen (74), die fest mit der Heizstation (14) verbunden sind, bewegbar ist;
- mindestens einem zweiten Elektromotor (76); und
- mindestens eine Keilwelle (78), die an einem ersten Ende davon mit dem zweiten Elektromotor (76) und an einem zweiten Ende davon mit dem Schlitten (72) funktionsfähig verbunden ist, wobei die Keilwelle (78) konfiguriert ist, um eine von dem zweiten Elektromotor (76) verliehene Drehbewegung in eine Hin- und Herbewegung des Schlittens (72) umzuwandeln.

9. Imprägnieranlage (10) nach einem der Ansprüche 1 bis 8, **dadurch gekennzeichnet, dass** mindestens eine der Heizstationen (14) mit Kippeinrichtungen (80) versehen ist, die konfiguriert sind, um der Heizstation (14) und damit jeder Komponente (100) eine Kippbewegung in Bezug auf eine Lagerungsebene des Tragrahmens (12) zu verleihen, wenn die Komponente (100) an seiner jeweiligen Greifvorrichtung (22) montiert ist und wenn die motorgetriebene Ausrüstung (16) zum Tragen und Handhaben der Komponente (100) außerhalb der Heizstation (14) platziert ist.

10. Imprägnieranlage (10) nach einem der Ansprüche 1 bis 9, **dadurch gekennzeichnet, dass** der Tragrahmen (12) mit einer oder mehreren Handhabungs- und Führungseinrichtungen (82, 84) versehen ist, wobei die eine oder die mehreren Imprägniereinrichtungen (18) und die eine oder die mehreren Transport- und Be-/Entladeeinrichtungen (20) auf bewegbare Weise an der einen oder den mehreren Handhabungs- und Führungseinrichtungen (82, 84) montiert sind.

11. Imprägnieranlage (10) nach Anspruch 10, **dadurch gekennzeichnet, dass** die Handhabungs- und Führungseinrichtungen (82, 84) aus einer oder mehreren oberen Gleitführungen (82), die an einem oberen Ende davon an dem Tragrahmen (12) positioniert sind, und aus einer oder mehreren unteren Gleitführungen (84), die an einer Lagerungsfläche an dem Tragrahmen (12) positioniert sind, bestehen, wobei sich jede Imprägniereinrichtung (18) entlang der oberen Gleitführungen (82) bewegt und von der zentralen Verarbeitungseinheit elektrisch gesteuert wird, um sich zu bewegen und sich selektiv vor jeder Heizstation (14) zu positionieren, wenn der Imprägnierschritt der Komponenten (100) durchgeführt wird.

## Revendications

1. Station d'imprégnation (10) destinée aux composants creux à symétrie axiale (100) de moteurs électriques, ladite station (10) étant constituée d'une pluralité de postes de travail et d'équipements gérés et commandés par une unité centrale de traitement, ladite station (10) comprenant :
- au moins un cadre de support (12) ;
- une ou plusieurs stations de chauffage (14), configurées pour chauffer chaque composant (100) à une température prédéterminée ;
- un ou plusieurs équipements motorisés (16) destinés à prendre en charge et à manipuler lesdits composants (100), chaque équipement motorisé (16) étant conçu pour prendre en charge et manipuler lesdits composants (100) et comprenant :
- au moins un dispositif de préhension (22) pour un composant correspondant (100),
- un premier moyen de rotation motorisé (24), conçu pour imprimer un mouvement de rotation à chaque dispositif de préhension (22), dans les deux sens de rotation, autour d'un axe de rotation prédéterminé, qui coïncide avec l'axe de symétrie dudit composant (100) lorsqu'il est maintenu par un dispositif de préhension (22) correspondant,
- un deuxième moyen de translation motorisé (26), configuré pour imprimer un mouvement de translation de l'intérieur vers l'extérieur d'une station de chauffage (14) respective, et inversement, à chaque équipement motorisé (16) destiné à prendre en charge et à manipuler lesdits composants (100), à l'aide de leurs dispositifs de préhension (22) correspondants ;
- un ou plusieurs équipements d'imprégnation (18), configurés pour enduire au moins une partie de chaque composant (100) d'une substance d'imprégnation lorsque ledit composant est maintenu par un dispositif de préhension (22) correspondant ; et
- un ou plusieurs équipements de transport et de chargement/déchargement (20), destinés à transférer lesdits composants (100) depuis et vers ladite ou lesdites stations de chauffage (14),
la station d'imprégnation (10) étant **caractérisée en ce que** chaque dispositif de préhension (22) comprend au moins un corps annulaire (28) muni d'au moins une cavité interne (30) à symétrie axiale, ladite cavité interne (30) présentant une dimension maximale (D1), telle que mesurée dans une direction radiale, supérieure à la dimension maximale (D2) mesurée dans la direction radiale de chaque composant (100), de sorte que ladite cavité interne (30) puisse loger ledit composant (100) en son sein, et dans laquelle ledit corps annulaire (28) comprend au moins un moyen de préhension (32) faisant face à ladite cavité interne (30) pour saisir la surface latérale extérieure du corps creux à symétrie axiale qui forme chaque composant (100) et pour maintenir ledit composant (100) à l'intérieur de ladite cavité interne (30), dans lequel ledit corps annulaire (28) est un corps cylindrique et ladite cavité interne (30) a une forme circulaire, dans lequel la dimension maximale (D1) de ladite cavité interne (30) correspond au diamètre de ladite cavité interne (30), et dans lequel chaque moyen de préhension (32) comprend au moins un élément poussoir (34) en forme de tige, qui est mobile suivant un mouvement de va-et-vient à l'intérieur d'un trou de guidage (48) correspondant pratiqué dans une direction radiale sur ledit corps annulaire (28), ledit élément poussoir (34) comprenant, à une extrémité de celui-ci qui fait face à ladite cavité interne (30), au moins un élément de serrage (36) configuré pour s'appuyer par friction sur la surface latérale extérieure du corps creux à symétrie axiale qui constitue chaque composant (100) placé à l'intérieur de ladite cavité interne (30).

2. Station d'imprégnation (10) selon la revendication 1, **caractérisée en ce que** ledit corps annulaire (28) comprend au moins deux moyens de préhension (32) qui sont espacés de manière régulière sur la circonférence.

3. Station d'imprégnation (10) selon la revendication 2, **caractérisée en ce que** tous les moyens de préhension (32) sont actionnés simultanément au moyen d'un mécanisme qui comprend successivement :
- au moins une clavette de serrage (38), qui est placée sur la surface circonférentielle extérieure dudit corps annulaire (28) et qui peut être actionnée pour être mise en rotation ;
- au moins une roue dentée (40), avec laquelle ladite clavette de serrage (38) est en prise et qui peut être entraînée en rotation par une rotation correspondante de ladite clavette de serrage (38) ;
- au moins une couronne d'orientation (42), avec laquelle ladite roue dentée (40) est en prise et sur laquelle elle peut effectuer un mouvement circonférentiel à l'intérieur dudit corps annulaire (28) ;
- au moins une broche (44), qui est solidaire de ladite couronne d'orientation (42) d'un côté et d'un élément poussoir (34) correspondant de l'autre côté, et qui est disposée de manière perpendiculaire au sens de déplacement dudit élément poussoir (34) ; et
- au moins une fente (46), qui se prolonge à l'intérieur dudit corps annulaire (28) entre une première extrémité (46A) de ladite fente (46), située à une plus grande distance du centre géométrique dudit corps annulaire (28), et une deuxième extrémité (46B) de ladite fente (46), située à une plus petite distance du centre géométrique dudit corps annulaire (28), de sorte qu'un mouvement de glissement de ladite broche (44) à l'intérieur d'une fente (46) correspondante entre ladite première extrémité (46A) et ladite deuxième extrémité (46B) provoque un mouvement de glissement correspondant de son élément poussoir (34) correspondant à l'intérieur du trou de guidage (48) dans une direction telle qu'il se rapproche de la surface latérale extérieure du corps creux à symétrie axiale qui constitue chaque composant (100) placé à l'intérieur de ladite cavité interne (30), tandis qu'un mouvement de glissement de ladite broche (44) à l'intérieur d'une fente (46) correspondante entre ladite deuxième extrémité (46B) et ladite première extrémité (46A) provoque un mouvement de glissement correspondant de son élément poussoir (34) correspondant à l'intérieur du trou de guidage (48) dans une direction s'éloignant de la surface latérale extérieure du corps creux à symétrie axiale qui constitue chaque composant (100) placé à l'intérieur de ladite cavité interne (30).

4. Station d'imprégnation (10) selon l'une quelconque des revendications 1 à 3, **caractérisée en ce que** chaque élément poussoir (34) en forme de tige est muni d'au moins un ressort de compression (50), ledit ressort étant configuré pour compenser les dilatations thermiques éventuelles du composant (100) placé à l'intérieur de ladite cavité interne (30).

5. Station d'imprégnation (10) selon l'une quelconque des revendications 1 à 4, **caractérisée en ce que** lesdits premiers moyens de rotation motorisés (24) comprennent :
- au moins un premier moteur électrique (52) ;
- un réducteur (54) ;
- au moins un premier arbre de transmission (56), relié de manière fonctionnelle audit premier moteur électrique (52) à l'une de ses extrémités et sur l'autre extrémité duquel est calé un engrenage (64), ledit engrenage (64) étant conçu pour transmettre un mouvement de rotation dudit premier moteur électrique (52) audit réducteur (54) ;
- au moins une couronne dentée (58), solidaire du corps annulaire (28) d'un seul dispositif de préhension (22) ; et
- au moins un deuxième arbre de transmission (60), relié de manière fonctionnelle audit réducteur (54) à l'une de ses extrémités et sur la deuxième extrémité duquel est calé un pignon d'entraînement (66), conçu pour transmettre le mouvement dudit réducteur (54) à ladite couronne dentée (58).

6. Station d'imprégnation (10) selon la revendication 5, **caractérisée en ce que** chaque équipement motorisé (16) destiné à prendre en charge et à manipuler lesdits composants (100) comprend un ou plusieurs pignons fous (62), qui sont agencés de manière à transmettre le mouvement de la couronne dentée (58) entraînée par ledit pignon d'entraînement (66) à un ou plusieurs dispositifs de préhension (22), dont les couronnes dentées (58) sont en prise avec les pignons fous (62) correspondants.

7. Station d'imprégnation (10) selon l'une quelconque des revendications 1 à 6, **caractérisée en ce que** chaque dispositif de préhension (22) est monté sur un cadre de support (70) unique et peut tourner par rapport audit cadre de support (70) grâce à l'interposition d'une pluralité de roulements (68).

8. Station d'imprégnation (10) selon l'une quelconque des revendications 1 à 7, **caractérisée en ce que** lesdits deuxièmes moyens de translation motorisés (26) comprennent :
- au moins une glissière (72), qui prend en charge lesdits dispositifs de préhension (22) et est mobile selon un mouvement de va-et-vient le long de guides (74) solidaires de ladite station de chauffage (14) ;
- au moins un deuxième moteur électrique (76) ; et
- au moins un arbre cannelé (78), qui est relié de manière fonctionnelle audit deuxième moteur électrique (76) à une première extrémité et à ladite glissière (72) à une deuxième extrémité, ledit arbre cannelé (78) étant configuré pour transformer un mouvement de rotation imprimé par ledit deuxième moteur électrique (76) en un mouvement alternatif de ladite glissière (72).

9. Station d'imprégnation (10) selon l'une quelconque des revendications 1 à 8, **caractérisée en ce qu'**au moins l'une desdites stations de chauffage (14) est équipée de moyens d'inclinaison (80), configurés pour imprimer un mouvement d'inclinaison à ladite station de chauffage (14), et donc à chaque composant (100), par rapport à un plan d'appui dudit cadre de support (12), lorsque ledit composant (100) est monté sur son dispositif de préhension (22) correspondant et lorsque ledit équipement motorisé (16) destiné à prendre en charge et à manipuler lesdits composants (100) est placé à l'extérieur de ladite station de chauffage (14).

10. Station d'imprégnation (10) selon l'une quelconque des revendications 1 à 9, **caractérisée en ce que** ledit cadre de support (12) est muni d'un ou plusieurs moyens de manutention et de guidage (82, 84), ledit un ou plusieurs équipements d'imprégnation (18) et ledit un ou plusieurs équipements de transport et de chargement/déchargement (20) étant montés de manière mobile sur ledit un ou plusieurs moyens de manutention et de guidage (82, 84).

11. Station d'imprégnation (10) selon la revendication 10, **caractérisée en ce que** lesdits moyens de manutention et de guidage (82, 84) sont constitués d'un ou plusieurs guides coulissants supérieurs (82), disposés sur ledit cadre de support (12) à son extrémité supérieure, et d'un ou plusieurs guides coulissants inférieurs (84), disposés sur ledit cadre de support (12) au niveau d'une surface d'appui, dans laquelle chaque équipement d'imprégnation (18) se déplace le long desdits guides coulissants supérieurs (82) et est commandé de manière électrique par ladite unité centrale de traitement pour se déplacer et se positionner de manière sélective devant chaque station de chauffage (14) lorsque l'étape d'imprégnation desdits composants (100) est effectuée.
